# EUROPEAN PATENT APPLICATION

(11) **EP 1 406 158 A2**
(43) Date of publication of application: **07.04.2004**
(21) Application number: 03017455.1
(22) Date of filing: 01.08.2003
(51) Int. Cl.: G06F 3/033

(54) **Portable electronic equipment**

(30) Priority: 06.08.2002 JP 2002228870
(71) Applicant: MATSUSHITA ELECTRIC INDUSTRIAL CO., LTD., Kadoma-shi, Osaka 571-8501 (JP)
(72) Inventor: Yamamoto, Tamotsu, Ashiya-shi, Hyogo 659-0096 (JP); Yokoji, Shigeru, Moriguchi-shi, Osaka 570-0035 (JP); Sawada, Masaki, Suita-shi, Osaka 565-0874 (JP); Okada, Hiroyasu, Kawanishi-shi, Hyogo 666-0135 (JP); Inoue, Hiroto, Kyotanabe-shi, Kyoto 610-0353 (JP)
(74) Representative: Grünecker, Kinkeldey, Stockmair & Schwanhäusser Anwaltssozietät

(57) **Abstract**

Portable electronic equipment capable of changing the display on a display means so that the display has letters of a desired size, by a simple operation. The portable electronic equipment has (a) a display means for displaying information, (b) a first manipulator means for performing a first screen process on the information displayed on the display means, (c) a second manipulator means for performing a second screen process on the information by operation in a circumferential direction thereof, and (d) a controller means. The controller means controls the first manipulator means, the second manipulator means, and the display means. Thereby, the controller can perform the first screen process of scrolling the screen in an arbitrary direction to select a display position and the second screen process of scaling up, scaling down, and switching the screen with the selected display position as a reference.

## Description

### TECHNICAL FIELD

The present invention relates to portable electronic equipment represented by a portable telephone, a personal digital assistant (PDA), and other devices.

### BACKGROUND ART

Recent years have seen the progress in size and weight reduction of various kinds of electronic equipment and permeation of portable electronic equipment represented by a portable telephone and a PDA.

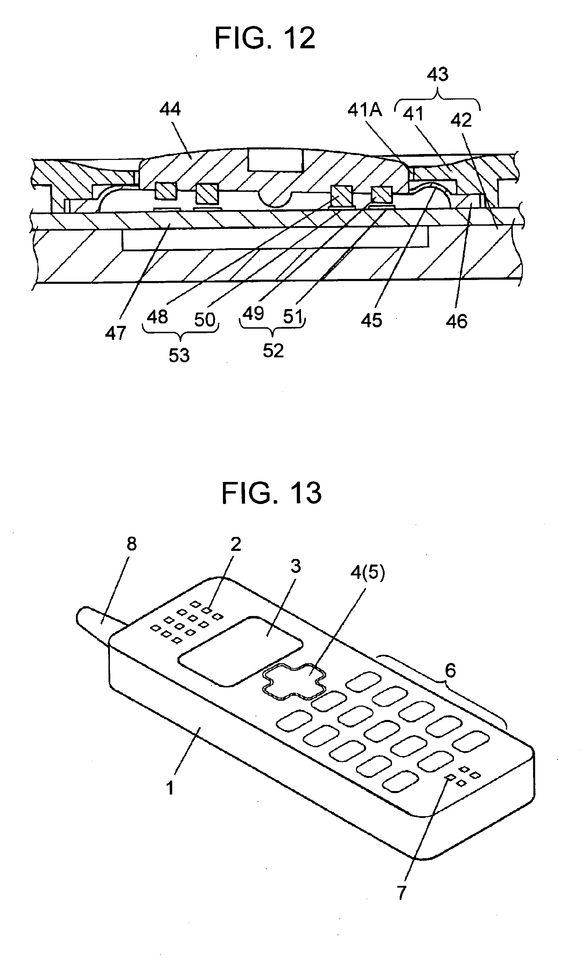

Such conventional portable electronic equipment is described using Fig. 13.

Fig. 13 is a perspective view illustrating an appearance of a portable telephone as conventional portable electronic equipment. In the drawing, the top face, i.e. an operational surface, of housing 1 shaped like substantially a rectangular parallelepiped has: receiver 2; display means 3 made of a liquid crystal display (LCD) or the like; depressing type multi-directional switch 5 having cross-shaped press button 4; ten key 6; and transmitter 7. These components are disposed from the top to the bottom of the top face in order. Disposed at the top of housing 1 is antenna 8.

Additionally, housed in housing 1 are a circuit board (not shown) having a microcomputer (not shown) mounted thereon and other components. This microcomputer functions as a controller and controls the entire telephone device including receiver 2 and antenna 8, and individual components thereof.

For a conventional portable telephone having such a structure, generally, while viewing the display (e.g. a telephone number list) on display means 3, a user depresses press button 4 to operate multi-directional switch 5 in one of vertical and horizontal directions. Responsive to a signal supplied from multi-directional switch 5 through this operation, the microcomputer performs a predetermined control operation. Then, for example, the position of the cursor on display means 3 is sequentially moved in one of vertical and horizontal directions according to the operation. When the cursor is placed on a desired item (e.g. a desired telephone number), the user operates a switch for determination, for example, to determine the selected item.

For the conventional portable telephone, display means 3 has gradually been enlarged in recent years. However, because of portable electronic equipment, the size of the display means is restricted. On the other hand, it is desired that necessary information, such as text information like letters and numeric characters, should be displayed on display means 3 of a predetermined size as much as possible. However, increasing the quantity of information to be displayed on a limited size of display means 3 as discussed above makes the size of displayed letters smaller. Thus, this poses a problem: it is difficult to view the display on display means 3.

In other words, when a large quantity of information is displayed on display means 3 using small letters, it is difficult for the user to view each item when he/she selects a desired item by operation of multi-directional switch 5. Thus, the portable telephone has poor operability.

### SUMMARY OF THE INVENTION

The present invention addresses the conventional problem discussed above, and aims to provide portable electronic equipment in which the display on a display means can be changed to have letters of a desired size with a simple operation.

In order to attain this object, portable electronic equipment of the present invention includes:
a first manipulator means for performing a first screen process on an information displayed on a display means;
a second manipulator means for performing a second screen process on the information by operation in a circumferential direction thereof; and
a control means.

The control means controls the first manipulator means, the second manipulator means, and the display means, thereby performing the first screen process of scrolling the displayed screen in an arbitrary direction to select a display position, and the second screen process of scaling up, scaling down, and switching the screen with the selected display position as a reference.

### BRIEF DESCRIPTION OF THE DRAWINGS

Fig. 1 is a perspective view illustrating an appearance of a portable telephone of a first exemplary embodiment of the present invention.
Fig. 2 is a sectional view illustrating a structure of a first and second manipulator means.
Fig. 3 is an exploded perspective view illustrating a structure of the first and second manipulator means.
Fig. 4 is a block diagram of the portable telephone in accordance with the first exemplary embodiment of the present invention.
Fig. 5 is a sectional view showing how the first manipulator means is operated.
Fig. 6 is a drawing showing how a telephone number list in an initial state is displayed on a display means.
Fig. 7 is a drawing showing how a telephone number list is displayed on the display means when the second manipulator means is operated.
Fig. 8 is a partial top view illustrating another arrangement of a first and second manipulator means.
Fig. 9 is a sectional view illustrating a structure of a first and second manipulator means of a second exemplary embodiment of the present invention.
Fig. 10 is an exploded perspective view of the portable telephone in accordance with the second exemplary embodiment of the present invention.
Fig. 11 is a sectional view showing how a functional member constituting a first manipulator means.
Fig. 12 is a sectional view showing how a second manipulator means is operated.
Fig. 13 is a perspective view illustrating an appearance of a conventional portable telephone.

### DETAILED DESCRIPTION OF PREFERRED EMBODIMENT

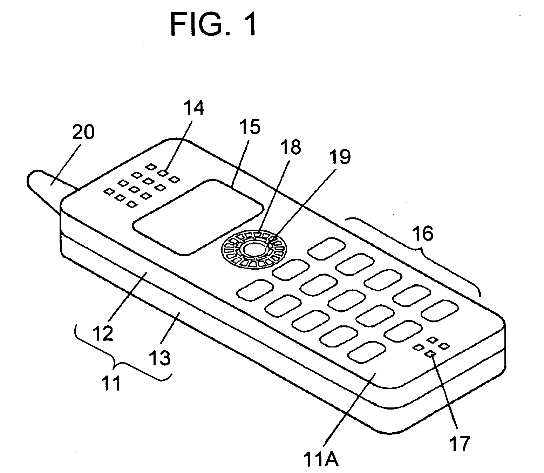

Exemplary embodiments of the present invention are described hereinafter using Figs. 1 through 12.

### First Exemplary Embodiment

In the first exemplary embodiment, a description of portable electronic equipment is provided using a portable telephone.

Figs. 1 through 3 illustrate a portable telephone in accordance with the first exemplary embodiment of the present invention. In the drawings, hollow housing 11 having an outer shape of substantially a rectangular parallelepiped is made of combination of upper first case 12 and lower second case 13.

In this housing 11, top face 11A serves as an operational surface. Housing 11 has receiver 14 and display means 15 made of a liquid crystal display (LCD), an EL device or the like, in the upper part of top face 11A, and ten key 16 and transmitter 17, in the lower part of top face 11A. Additionally, provided in a position between display means 15 and ten key 16 is ring-shaped manipulator 18 that can be operated rotatably.

Inside of ring-shaped manipulator 18, one press button 19 that can be operated by tilting in horizontal and vertical directions with respect to housing 11 is provided so that rotation thereof is restricted. Further, antenna 20 is provided at the top end of housing 11.

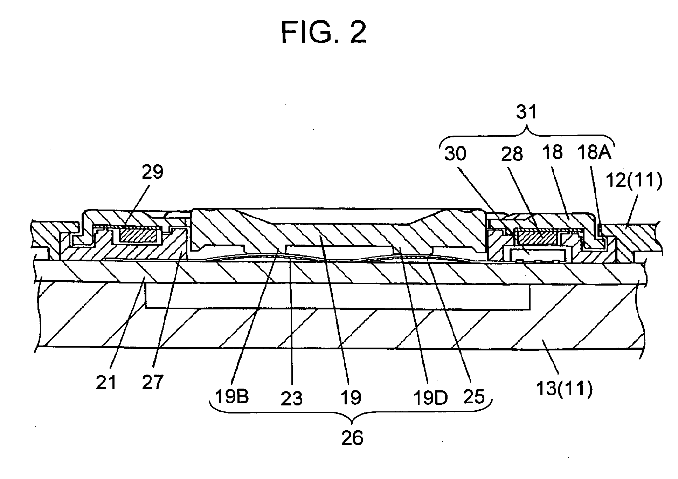

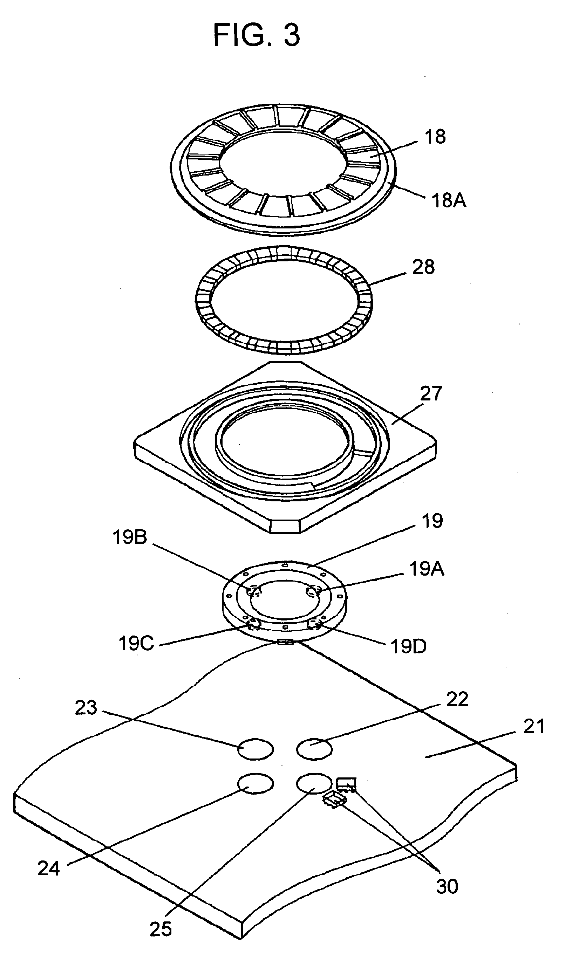

On the other hand, printed circuit board (PCB) 21 is housed in housing 11. Disposed in positions on PCB 21 opposed to press button 19 are four switch elements 22, 23, 24, and 25 (see Fig. 3) that are self-restoring and operated by depression. Depressing protrusions 19A, 19B, 19C and 19D (see Fig. 3) provided on the bottom face of press button 19 are disposed in positions corresponding to switch elements 22, 23, 24, and 25, respectively. In other words, this press button 19, and switch elements 22, 23, 24, and 25 constitute a multi-directional operating switch, which functions as first manipulator means 26 (see Fig. 2).

Each of switch elements 22, 23, 24, and 25 is made of at least two fixed contacts disposed on PCB 21, and a self-restoring movable contact formed like a circular dome (not shown). When a switch element is depressed from its top, its movable contact is inverted and establishes electrical connection between its two fixed contacts. When depressing force is removed, the movable contact is returned to its original shape by restoring force of its own and separation of the fixed contacts breaks the electrical connection.

On the other hand, ring-shaped manipulator 18 is rotatably engaged with mount 27 attached to PCB 21. Rim 18A formed so as to project along the outer circumference of manipulator 18 is inserted between mount 27 and first upper case 12 with a predetermined clearance provided therebetween so that manipulator 18 does not come off.

Further, provided on the bottom face of this ring-shaped manipulator 18 is ring magnet 28 that is magnetized to the north pole and the south pole alternately at intervals of a specific angle. Ring magnet 28 is fixed to ring-shaped manipulator 18 to rotate therewith. As shown in Fig. 2 only, magnetic plate 29 is provided between the bottom face of ring-shaped manipulator 18 and ring magnet 28 to prevent leakage of magnetic field in the direction upward of ring magnet 28.

As shown in Fig. 3, two magnetic sensors 30 are mounted on PCB 21 opposed to ring magnet 28 in the vertical direction, at an angle with each other. The magnetic sensors detect changes in magnetic field caused by the rotation of this ring magnet 28. The direction and amount of rotation of ring magnet 28 can be determined by comparing the pulse output form these two magnetic sensors 30. In other words, these ring magnet 28 and magnetic sensors 30 constitute a magnetic incremental encoder (rotation detection means) for determining how ring-shaped manipulator 18 is rotated. Ring-shaped manipulator 18 including this incremental encoder functions as second manipulator means 31 (see Fig. 2).

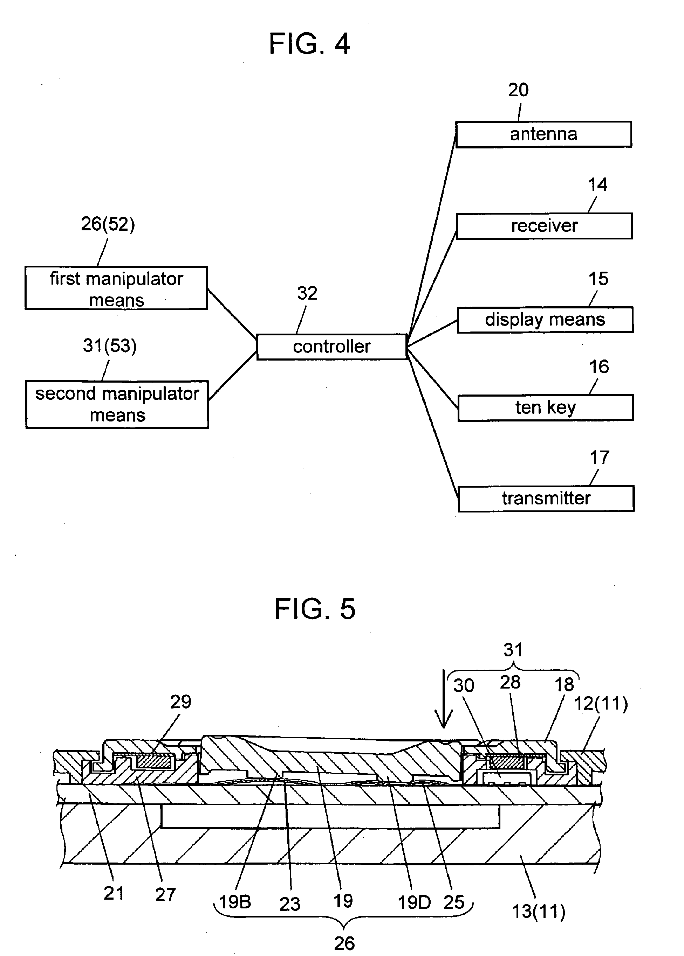

Each of these first manipulator means 26, second manipulator means 31, and other functional components, such as receiver 14, display means 15, ten key 16, transmitter 17, and antenna 20, is coupled to controller 32 disposed on PCB 21. As shown in the block diagram of Fig. 4, controller 32 includes a microcomputer and controls all the functional components coupled thereto. For example, when a signal is supplied from first manipulator means 26 or second manipulator means 31, controller 32 performs a control operation, such as switching the display on display means 15, responsive to the input signal.

Display means 15 needs not be placed inside of the portable equipment necessarily as discussed above, and it can be a display apparatus or television set, for example.

A description is provided hereinafter of the actions of a portable telephone of the first exemplary embodiment structured as above.

First, a multi-directional operating switch, as first manipulator means 26, is depressed. For example, the end of press button 19 corresponding to the downward direction among vertical and horizontal directions with respect to housing 11 is depressed as shown by the arrow in the sectional view of Fig. 5. In this case, only press button 19 tilts so that the depressed portion goes downwardly. Accordingly, depressing protrusion 19D on the bottom face in the corresponding position goes downwardly, thus depressing switch element 25 for actuation. Thus, a signal indicating that the state of this switch element 25 is changed is fed into controller 32. Then, responsive to the input signal, controller 32 sequentially scrolls the display and moves the position of the cursor on display means 15 in the downward direction.

When depressing force on press button 19 is removed, switch element 25 is returned to its original shape by restoring force of its own. This pushes up and returns press button 19 to the normal state as shown in Fig. 2.

In a similar manner as discussed above, when another end position of press button 19 is depressed to operate another corresponding switch element 22, 23, or 24, display means 15 is controlled by controller 32 and changed to a predetermined state. Likewise, when the depressing force on press button 19 is removed, press button returns to the normal state shown in Fig. 2.

The portable telephone of this first exemplary embodiment is letterized by having second manipulator means 31 operable independently of the depressing operation of first manipulator means 26, and especially employing ring-shaped manipulator 18 easily operable in a circumferential direction thereof, as the operational portion of second manipulator means 31.

This ring-shaped manipulator 18 is structured to be rotatably operable independently of first manipulator means 26 as discussed above. It is also structured so that the output from the incremental encoder is provided in response to the rotation operation. A description is provided of the operations and actions of the ring-shaped manipulator hereinafter, using a case of searching telephone numbers as an example.

### First Specific Example of Operation

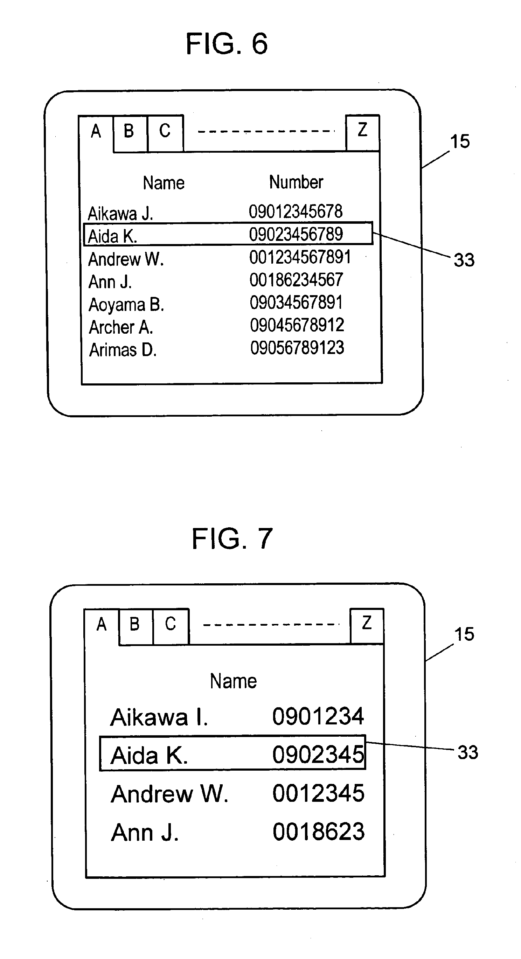

First, a user operates first manipulator means 26, ten key 16, and other components to display a telephone number list on display means 15, as shown in Fig. 6.

In this telephone number list, as shown in Fig. 6, one page is allocated to each of the alphabets. Respective pages are placed one on another with the page of A placed on the top layer and the others placed in alphabetical order. In each page, telephone numbers each corresponding to one name are listed in a plurality of rows in the order of Aa, Ab, Ac, and the like. Only the top portion is displayed on display means 15. A selected item is pointed by cursor 33.

Controller 32 controls the portable telephone so that the depressing operation of first manipulator means 26 in a vertical direction allows scrolling of the display from one item to another within a predetermined page of the telephone list and the depressing operation of first means 26 in a horizontal direction allows movement between the respective alphabetical layers. The movement within a page or between alphabetical layers performed using the first manipulator means is referred to as a first screen process.

In this portable telephone, the size of the displayed letters of telephone numbers each corresponding to one name is smaller than that of a conventional portable telephone. Thus, a larger number of rows are displayed on display means 15. The user scrolls the screen vertically and horizontally through specific operation of first manipulator means 26 to display a desired item on display means 15. Next, in order to select the telephone number of the desired person without fail, the user rotates ring-shaped manipulator 18, i.e. the operational portion of second manipulator means 31, clockwise. In other words, while lightly touching a point on ring-shaped manipulator 18, the user moves it clockwise in a circumferential direction thereof. This operation causes ring-shaped manipulator 18 itself to rotate clockwise. This rotation causes ring magnet 28 to rotate together, thus generating a change in magnetic field. As a result, magnetic sensors 30 that have detected the change in magnetic field generate a specific pulse signal and the signal is fed into controller 32.

Then, controller 32 detects the direction and amount of rotation of ring-shaped manipulator 18 from the input signal from the incremental encoder that has been supplied by the rotation operation. According to the detection result, controller 32 scales up the size of cursor 33 and letters around the cursor for display on display means 15, as shown in Fig. 7.

In the first exemplary embodiment, letters centered around the position of cursor 33 are scaled up. Thus, the letters including the item currently selected are scaled up, and the portable telephone is user-friendly. However, a reference other than the position of cursor 33, such as the central position of display means 15, can also be used. Besides cursor 33, a pointer shaped like an arrow or the like displayed on display means 15 can also be used as a reference.

On the other hand, when ring-shaped manipulator 18 is rotated counter-clockwise, controller 32 scales down display information on display means 15, such as letters.

When first manipulator means 26 is operated with the display scaled up or down, the control of controller 32 allows the screen to be scrolled or jumped to another page while the scaled-up or -down display is maintained.

As discussed above, in the portable telephone of the first exemplary embodiment, the operation of first manipulator means 26 can change the selected position in display means 15 vertically and horizontally, and the operation of second manipulator means 31 can scale up or down the display. Scaling up the display includes scaling up the display area and text being displayed. Thus, the display on display means 15 can easily be set or changed as a user desires, using ring-shaped manipulator 18.

Additionally, because first manipulator means 26 is for depression and second manipulator means 31 is for rotation, they are operated in different directions to actuate respective functions. Thus, the operational ways are unlikely to be confused and operation errors are minimized.

The portable telephone is structured such that the operational portion of second manipulator means 31 is formed as ring-shaped manipulator 18 and that press button 19 forming the operational portion of first manipulator means 26 is provided inside of the ring. This structure facilitates sequential change from depression to rotation or from rotation to depression with small movement of a finger.

In second manipulator means 31, rotation of ring-shaped manipulator means 18 allows the display on display means 15 to be scaled up or down. Therefore, a user can easily set a size of letters as he/she desires by continuous rotation while viewing how the letters are displayed.

Shown in the above description is an example of providing scaled-up display by clockwise rotation and scaled-down display by counter-clockwise rotation. However, the relation between the rotation direction and scaling can be reversed. Additionally, the relation between the rotation direction and scaling can be selected by a changeover switch, as necessary.

Further, when the speed of scaling is synchronized with the speed of rotation operation of ring-shaped manipulator 18, the size of displayed letters and the like change, according to a sense of operation. This further improves operational responsibility and makes the portable telephone more user-friendly.

The control of display means 15 performed by signals from this second manipulator means 31 can also be used for purposes other than scaling of the display discussed above. For example, in a telephone number list arranged as shown in Fig. 6, circumferential operation of second manipulator means 31 can cause movement within a page. In other words, the second manipulator means can be used to scroll a page up or down according to the amount of rotation thereof. Additionally, operation of second manipulator means 31 may cause movement between layers in a manner similar to that of the movement within a page. Now, movement between layers means movement from the page of A to the page of B, in the example of the first embodiment. As the layers, "a", "ka", or "sa" column of the Japanese kana syllabary can also be used besides alphabets. Alternatively, individual users can set layers of their own.

Movement within a page and between layers is referred to as screen change. Processes performed using the second manipulator means, such as scaling the display and screen change, are referred to as a second screen process.

Further, the portable telephone can be structured so that the above functions of scaling, and moving within a page and between layers performed according to the operation of second manipulator means 31 can be enabled by selection of required one of the functions with a specific switch.

The case described above is first manipulator means 26 of a depressing type multi-directional operating switch. However, the first manipulator means also includes, a multi-functional operating switch of the stick type, a touch panel switch, and a track ball. Any switch capable of scrolling the screen on display means 15 in vertical and horizontal directions can be used.

When a track ball is used as first manipulator means 26, the track ball can be operated freely without being restricted to vertical and horizontal four directions. For this reason, when cursor 33 or a pointer is set movable in eight directions, for example, the screen can be scrolled in eight different directions. When second manipulator means 31 can perform scaling at the same time, a portable telephone having further user-friendliness can be provided.

It is preferable to dispose first manipulator means 26 closely adjacent to second manipulator means 31. This placement facilitates sequential operation of the two manipulator means. As discussed above, placement of first manipulator means 26 inside of ring-shaped second manipulator means 31 can reduce the area of use.

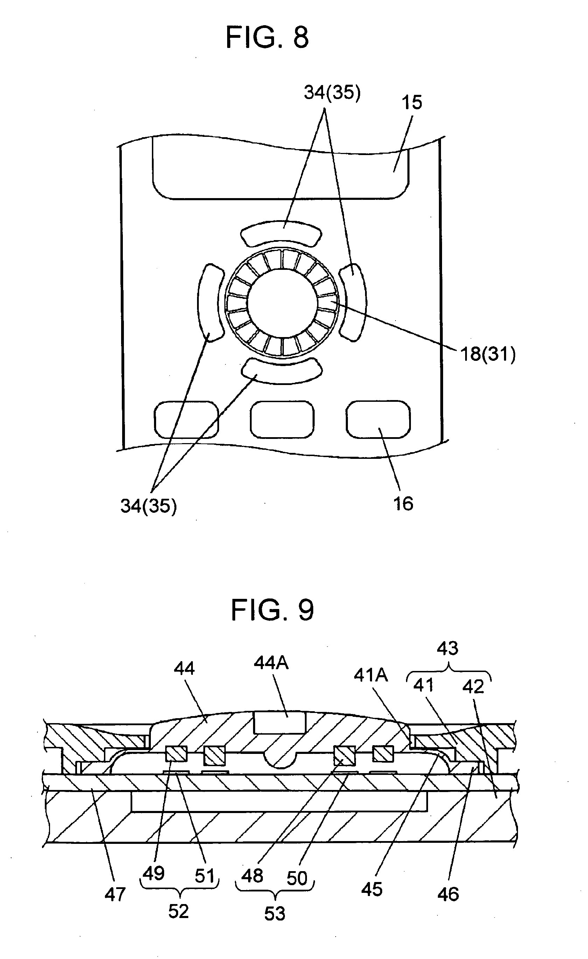

Further, as shown in the top view of Fig. 8, a plurality of depressing type switches 34 can be disposed as first manipulator means 35 to surround the outer circumference of ring-shaped manipulator 18, i.e. the operational portion of second manipulator means 31. Fig. 8 shows an example in which four depressing type switches 34 are disposed. This structure secures a large area as the operational portion of each depressing type switch 34, thereby improving operability of first manipulator means 35.

The first manipulator means and the second manipulator means can also be disposed so that they are not in proximity to each other and are separated.

As discussed above, in the portable electronic equipment of the present invention, a user can easily change the display on display means 15 as he/she desires by rotating the operational portion of second manipulator means 31 in a circumferential direction thereof.

### Second Exemplary Embodiment

A description is provided of another piece of portable electronic equipment of the present invention, using the second exemplary embodiment.

A portable telephone of the second exemplary embodiment is differs from the portable telephone of the first exemplary embodiment in the structure of the first and second manipulator means. The structures of the other components are the same as those of the first exemplary embodiment. In a manner similar to that of the first embodiment, controller 32 can control the second manipulator means to scale the display on display means 15. Therefore, same components are denoted with the same reference numerals, and detailed descriptions of these components are omitted.

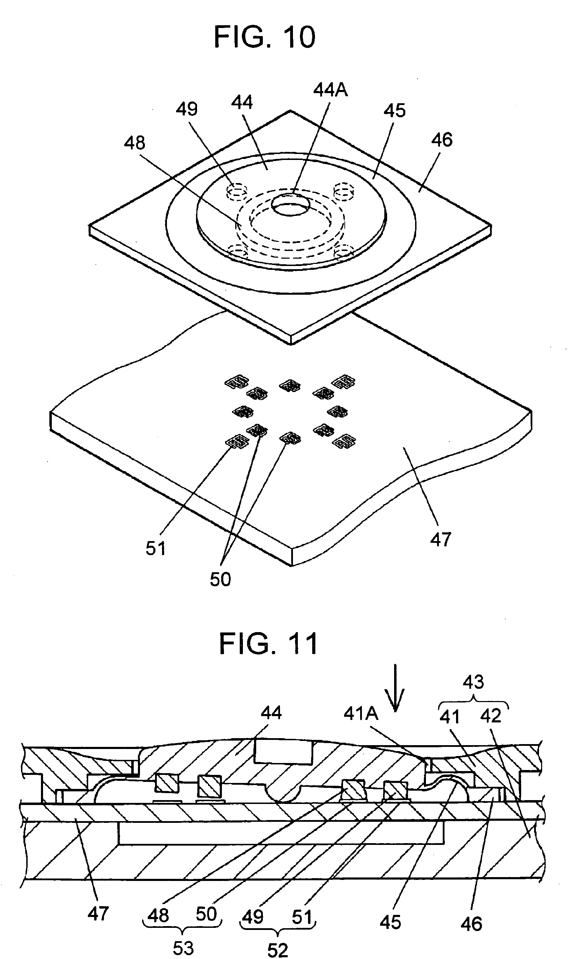

As shown in Fig. 9, housing 43 is made of combination of upper first case 41 and lower second case 42. Rubber manipulator 44 corresponding to the second manipulator means is disposed so as to protrude from circular hole 41A formed through first case 41. Rubber manipulator 44 has a dome-like top face. The top face has recess 44A at the center thereof. As shown in Fig. 9 and in the exploded perspective view of Fig. 10, this rubber manipulator 44 has thin skirt portion 45 and peripheral portion 46 leading to skirt portion 45 in the outer periphery of the rubber manipulator. Peripheral portion 46 is sandwiched and held by upper first case 41 and printed circuit board (PCB) 47 housed in housing 43.

For materials of rubber manipulator 44, natural rubber and synthetic rubber are suitable. Besides these, materials having appropriate elasticity can be used. The use of a material having moldability allows rubber manipulator 44 and thin skirt portion 45 in the outer periphery thereof to be integrally molded, and thus is preferable.

Recess 44A provided at the center of the top face of rubber manipulator 44 is a guide for sliding operation, which will be described later.

Disposed on the bottom face of this rubber manipulator 44 is ring-shaped depressing portion 48 made of conductive rubber. In vertical and horizontal positions with respect to housing 43 in an area concentric with ring-shaped depressing portion 48 on the outer circumferential side thereof, four depressing protrusions 49 made of conductive rubber are disposed in orthogonal relation with each other.

Additionally, clearly indicating the positions where depressing protrusions 49 are provided can further ensure the operation of first manipulator means 52. For this purpose, predetermined markings or indication means (not shown) made of hills and valleys are provided in positions on the top face of rubber manipulator 44 or the top face of first case 41 of housing 43, corresponding to depressing protrusions 49.

In the normal state, these ring-shaped depressing portion 48 and depressing protrusions 49 are opposed to PCB 47 with predetermined clearances provided therebetween. Ring-shaped depressing portion 48 is disposed nearer to PCB 47 than depressing protrusions 49. In positions on PCB 47 opposed to this ring-shaped depressing portion 48 with a predetermined clearance provided therebetween, a plurality of second independent contacts 50 independent of one another are disposed in substantially a ring shape to be spaced at an equal angle. In positions on PCB 47 opposed to these depressing protrusions 49 with a predetermined clearance provided therebetween, four first independent contacts 51 independent of one another are disposed.

Each of second independent contacts 50 and first independent contacts 51 is made of a comb-shaped contact. When ring-shaped depressing portion 48 and depressing protrusion 49 are brought into contact with corresponding comb-shaped contacts, the conductive rubber short-circuits the respective comb-shaped contacts opposed thereto, thereby establishing electrical connection therebetween.

The lead of each of the second independent contacts 50 and first independent contacts 51 is not shown.

In the above structure, depressing protrusions 49 and first independent contacts 51 function as first manipulator means 52, and ring-shaped depressing portion 48 and second independent contacts 50 function as second manipulator means 53. In other words, the portable telephone of the second exemplary embodiment is structured such that functional members serving as first manipulator means 52 are disposed on the bottom face of rubber manipulator 44 forming the operational portion of second manipulator means 53.

Respective first independent contacts 51 and corresponding depressing protrusions 49 are structured as opposed contacts. Similarly, respective second independent contacts 50 and ring-shaped depressing portion 48 are structured as opposed contacts. Structuring a membrane type switch having opposed contacts as discussed above can reduce the thickness of the portable telephone.

Next, a description is provided of the actions of the portable telephone of the second exemplary embodiment.

### Second Specific Example of Operation

Unlike the second manipulator means of the first exemplary embodiment, rubber manipulator 44 as second manipulator means 53 of this second exemplary embodiment cannot be rotated independently. For this reason, second manipulator means 53 is operated by sliding second manipulator means 53 from the top face of rubber manipulator 44. The functional members (depressing protrusions 49 and first independent contacts 51) disposed on the bottom face of rubber manipulator 44 as first manipulator means 52 are operated by depressing the functional members from the top face of rubber manipulator 44.

A description is provided of a case in which the display on display means 15 is scrolled vertically or horizontally. First, as shown by the arrow in Fig. 11, a user strongly depresses the end position of rubber manipulator 44 corresponding to a desired direction in order to operate first manipulator means 52 disposed in the position corresponding to the desired direction. At this time, providing indicating means made of predetermined markings discussed above facilitates recognition of the position to be depressed and improves operability.

Depressing rubber manipulator 44 deflects skirt portion 45 and tilts the manipulator in the corresponding direction. This brings the corresponding part of ring-shaped depressing portion 48 on the bottom face of rubber manipulator 44 and corresponding one of depressing protrusions 49 into contact with PCB 47 sequentially. At this time, the portable telephone is structured so that the part of ring-shaped depressing portion 48 is brought into contact with second independent contact 50 on PCB 47, and then the one of depressing protrusion 49 is brought into contact with first independent contact 51 on PCB 47.

Ring-shaped depressing portion 48 made of conductive rubber is elastic. Thus, it elastically deforms after being brought into contact with PCB 47. Therefore, after ring-shaped depressing portion 48 is brought into contact with PCB 47 first, little influence is exercised on depressing operation performed thereafter. In other words, resistance of ring-shaped depressing portion 48 against depressing force does not hinder the operation of the second manipulator means.

Second independent contact 50 and first independent contact 51 in contact with the corresponding depressing components establish electrical connection because the combs are short-circuited by the corresponding conductive members. These electrical connection signals are fed into controller 32, in a manner similar to those of the first exemplary embodiment (see Fig. 4).

At this time, controller 32 receives an electrical connection signal from one of first independent contacts 51 within a predetermined period after receiving an electrical connection signal from second independent contact 50. Additionally, when the controller continuously receive electrical connection signals from this one of first independent contacts 51 for a predetermined period, the controller selects the electrical connection signals from this one of first independent contacts 51 only, and performs control for scrolling the screen on display means 15 in a direction in which the manipulator is tilted. In other words, display means 15 controlled by controller 32 changes to the state in which first manipulator means 52 functions.

When the depressing force is removed, rubber manipulator 44 is returned to the normal state as shown in Fig. 9 by the force of skirt portion 45 restoring to its original shape.

On the other hand, when a user slides the top face of rubber manipulator 44 in a circumferential direction with respect to recess 44A at the center thereof, depressing the rubber manipulator with force smaller than that of the depressing operation, rubber manipulator 44 is tilted with skirt portion 45 slightly deflected and only a part of ring-shaped depressing portion 48 is brought into contact with second independent contact 50 on PCB 47. This state is shown in the sectional view of Fig. 12.

At this time, because rubber manipulator 44 is slid in a circumferential direction thereof, one of second independent contacts 50 establishing electrical connection sequentially changes according to the direction of sliding operation. The signals obtained from this operation are fed into controller 32 and determined. According to the determination of the direction and speed of changes in the electrical connection of these second independent contacts 50, controller 32 performs control, such as scaling the display on display means 15, as discussed in the first exemplary embodiment. In other words, the portable telephone is controlled so that second manipulator means 53 functions.

However, when the sliding force is large, first independent contact 51 may establish electrical connection. Even in this case, controller 32 is set to determine that signals from first independent contact 51 are selected only when electrical connection from first independent contact 51 lasts for a predetermined period. Thus, by setting the predetermined period to an appropriate value, electrical connection from second independent contact 50 can easily be selected in sliding operation.

Alternatively, when it is recognized that one of second independent contacts 50 establishing electrical connection sequentially changes in a predetermined direction in a predetermined period, controller 32 can determine to ignore signals from first independent contact 51.

When the sliding operation is stopped, rubber manipulator 44 is returned to the normal state as shown in Fig. 9, in a manner similar to that of the depressing operation.

As discussed above, also for the portable telephone of the second exemplary embodiment, a user can easily set the display on display means 15 as he/she desires by performing operations for actuating first manipulator means 52 and second manipulator means 53.

Additionally, because the portable telephone of the second exemplary embodiment has functional members serving as first manipulator means 52 on the bottom face of one rubber manipulator 44 that also forms the operational portion of second manipulator means 53, the portable telephone of the second exemplary embodiment can be structured compact. It is also structured so that both sliding operation and depressing operations are performed on one rubber manipulator 44. Therefore, a user can easily perform both operations in sequence without releasing his/her finger from rubber manipulator 44, and change the display on display means 15 as he/she desires with high operability.

As for the shapes of the upper portion of rubber manipulator 44, a plurality of arc sections can be disposed around recess 44A in substantially a ring shape and respective functional members constituting the first manipulator means can be disposed on the bottom face of the corresponding arc sections. Also in this arrangement, depressing and sliding operations similar to those discussed above can be performed.

It is preferable that rubber manipulator 44 is formed in substantially a ring shape because this shape facilitates recognition of the sliding direction set in a circumferential direction of the rubber manipulator. However, other shapes can be used.

Additionally, for structures other than discussed above, e.g. a structure having a touch panel disposed under the operational portion of the second manipulator means, similar operations can be performed.

As the descriptions of the first and second exemplary embodiments prove, in the present invention, control for facilitating recognition of the display on the display means can be performed with a simple operation, i.e. circumferential operation of the second manipulator means. Thus, a user can set and use the display means easily and freely as he/she desires.

The present invention can also be embodied by structures other than described in the first and second exemplary embodiments, if they satisfy the above concepts.

### INDUSTRIAL APPLICABILITY

As discussed above, the present invention has an advantage of providing user-friendly portable electronic equipment in which a simple operation, i.e. circumferential operation of a second manipulator means thereof, can change the display on a display means as a user desires.

When the circumferential operation allows movement of the display containing items on the display means within a page or between layers other than scaling of the display, the operability is improved. Because small movement of a finger can sequentially operate first and second manipulator means, the present invention can have an advantage of providing portable electronic equipment in which sequential operation of both means can be performed easily.

When an incremental encoder capable of providing two pulse signals having phase difference as output signals is mechanically combined with a ring-shaped manipulator, the portable electronic equipment has another advantage. The ring-shaped manipulator can be rotated with high operability by placing one finger on a specific position of the ring-shaped manipulator, and the direction and amount of rotation of the ring-shaped manipulator can be detected from the output signals.

The present invention also has an advantage of structuring as thin type portable electronic equipment using a membrane switch that has opposed contacts. Weak depressing force in sliding operation establishes electrical connection between the opposed contacts.

## Claims

1. Portable electronic equipment comprising:
a first manipulator means for performing a first screen process on an information displayed on a display means;
a second manipulator means for performing a second screen process on the information; and
a controller means, said controller means controlling said first manipulator means, said second manipulator means, and said display means;
wherein, responsive to input from said first manipulator means, said controller means performs the first screen process of scrolling a screen displaying the information and selecting a display position; and
responsive to input in a circumferential direction from said second manipulator means, said controller means performs the second screen process, the second screen process being one of scaling up, scaling down, and switching the screen with the selected display position as a reference.

2. The portable electronic equipment of Claim 1, wherein
said second manipulator means includes a ring-shaped manipulator, and
said first manipulator means is provided on a side of one of inner and outer circumferences of said ring-shaped manipulator.

3. The portable electronic equipment of Claim 1, wherein said second manipulator means includes a rotatable ring-shaped manipulator, and further includes a rotation detection means for detecting a direction and amount of rotation of said second manipulator means.

4. The portable electronic equipment of Claim 3, wherein
said rotation detection means is disposed on a bottom face of said ring-shaped manipulator;
said rotation detection means comprises:
a ring magnet magnetized to a north pole and a south pole alternately at intervals of an equal angle and fixed on the bottom face of said manipulator; and
a pair of magnetic sensors opposed to said ring magnet with a predetermined clearance ; and
said rotation detection means detects movement of said ring magnet above said magnetic sensors.

5. The portable electronic equipment of Claim 3, wherein
said rotation detection means detects a direction and amount of rotation of said second manipulator means; and
said controller means performs a screen process, the screen process being one of scaling up, scaling down, and switching a displayed screen.

6. The portable electronic equipment of Claim 1, further comprising a circular manipulator, wherein
said circular manipulator includes said first manipulator means and said second manipulator means on a bottom side thereof; and
said second manipulator means can detect sliding operation of said manipulator in a circumferential direction thereof, and a direction and amount of rotation of said manipulator caused by the sliding operation.

7. The portable electronic equipment of Claim 6, wherein
said first manipulator means includes a press button and a self-restoring contact opposed to said press button; and
actuation of said self-restoring contact by said press button allows the screen on said display means to be scrolled at least vertical and horizontal directions.

8. The portable electronic equipment of Claim 6, wherein
said second manipulator means comprises:
a ring-shaped conductive depressing portion; and
a plurality of concentrically disposed second contacts opposed to said depressing portion with a predetermined clearance therebetween; and
a move of said depressing portion on said second contacts is detected as a direction and amount of rotation of the sliding operation.

9. The portable electronic equipment of Claim 6, wherein
according to a detected direction and amount of rotation of the sliding operation, said controller means performs a process, the process being one of scaling up, scaling down, switching the displayed screen.

10. The portable electronic equipment of Claim 6, including said first manipulator means along an outer circumference of said second manipulator means, wherein said first manipulator means includes a conductive depressing portion and a first contact opposed to said depressing portion.

11. The portable electronic equipment of Claim 6, wherein
said second manipulator means detects operation in a circumferential direction of said manipulator; and
said first manipulator means detects operation within the same plane in a direction different from that of said second manipulator means.

12. The portable electronic equipment of Claim 6, wherein said manipulator has an indication means for indicating a position of said first manipulator means.

13. The portable electronic equipment of Claim 1, wherein said first manipulator means is a multi-directional switch operated by one of depressing and tilting.

14. The portable electronic equipment of Claim 1, wherein said first manipulator means is a track ball.

15. The portable electronic equipment of Claim 1 further comprising a built-in display device.
